# EUROPEAN PATENT APPLICATION

(11) **EP 2 728 706 A2**
(43) Date of publication of application: **07.05.2014**
(21) Application number: 13188524.6
(22) Date of filing: 14.10.2013
(51) Int. Cl.: H02J 7/02

(54) **Method and apparatus for wireless power transmission**

(30) Priority: 05.11.2012 US 201213668360
(71) Applicant: O2 Micro, Inc., Santa Clara, CA 95054 (US)
(72) Inventor: Wang, Jun, 610041 Chengdu (CN); Wang, Qiang, 610041 Chengdu (CN); Dou, Fan, 610041 Chengdu (CN); Chen, Jun, 610041 Chengdu (CN); Wang, James, San Jose, CA 95130 (US)
(74) Representative: Lippert, Stachow & Partner

(57) **Abstract**

Method and apparatus for wireless power transmission. A first target level of a parameter associated with the electric power is sent to the transmitting device. The electric power is then received from the transmitting device. When the parameter of the received electric power reaches the first target level, a second target level of the parameter is sent to the transmitting device. The second target level of the parameter is determined based on a magnitude of a load coupled to the receiving device.

## Description

### BACKGROUND

### 1. Technical Field

The disclosure relates generally to a method and apparatus for wireless power transmission.

### 2. Discussion of Technical Background

Wireless power transmission is the transmission of electrical energy from a power source to an electrical load without interconnecting manmade conductors. The most common form of wireless power transmission is carried out using direct induction followed by resonant magnetic induction. Other methods include electromagnetic radiation in the form of microwaves or lasers and electrical conduction. Wireless power transmission has been used for battery charging, or other suitable loads, in a wide range of mobile devices, such as mobile phone, camera, music player, headset, etc.

In a wireless power transmission system, the receiving device (receiver) may provide control information to the transmitting device (transmitter) by, for example, load modulation on the power signal. Based on the received control information, the transmitting device may adjust a certain parameter associated with the transmitted electric power, e.g., the frequency, to the desired level in order to drive the load coupled to the receiving device. Known standards, such as QI communication protocol (Wireless Power Consortium), define how the receiving device communicates its power needs back to the transmitting device over the same magnetic coupling used for power transmission. For example, after the initial communication between the receiving and transmitting devices is established at a default pulse-width-modulation (PWM) frequency of 175 kHz, load is immediately coupled to the receiving device. However, as the default PWM frequency is relatively high, the corresponding load driving capacity of the received electric power is relatively low. As the load is immediately coupled to the receiving device, the rectified voltage may suddenly drop, which is undesirable for the receiving device. Moreover, as the current QI communication protocol supports up to 5W of output power, if the load is 10W or higher, the sudden voltage-drop may cause the receiving device fail to drive the load.

Accordingly, there exists a need for an improved solution for wireless power transmission to solve the above-mentioned problems.

### SUMMARY

The present disclosure describes methods, apparatus, and programming for wireless power transmission.

In one example, a method for a receiving device to wirelessly receive electric power from a transmitting device is provided. A first target level of a parameter associated with the electric power is sent to the transmitting device. The electric power is then received from the transmitting device. When the parameter of the received electric power reaches the first target level, a second target level of the parameter is sent to the transmitting device. The second target level of the parameter is determined based on a magnitude of a load coupled to the receiving device.

In another example, an apparatus including a receiving device is provided. The apparatus may consist of the receiving device. The receiving device includes a power reception unit, a control unit, and a communication unit. The power reception unit is configured to wirelessly receive electric power from a transmitting device. The control unit is operatively coupled to the power reception unit and is configured to control sending of a first target level of a parameter associated with the electric power to the transmitting device. The control unit is further configured to, when the parameter of the received electric power reaches the first target level, control sending of a second target level of the parameter to the transmitting device. The second target level of the parameter is determined based on a magnitude of a load coupled to the receiving device. The communication unit is operatively coupled to the power reception unit and the control unit and is configured to send the first and second target levels of the parameter to the transmitting device. Further, in said apparatus, the parameter may be at least one of voltage, current, and power. Further, in said apparatus, the first target level of the parameter may be higher than the second target level of the parameter. Further, in said apparatus, the magnitude of the load may correspond to a level of load current.

In still another example, a system for wireless power transmission is provided. The system includes a receiving device and a transmitting device. The receiving device includes a power reception unit, a control unit, and a communication unit. The power reception unit is configured to wirelessly receive electric power from a transmitting device. The control unit is operatively coupled to the power reception unit and is configured to control sending of a first target level of a parameter associated with the electric power to the transmitting device. The control unit is further configured to, when the parameter of the received electric power reaches the first target level, control sending of a second target level of the parameter to the transmitting device. The second target level of the parameter is determined based on a magnitude of a load coupled to the receiving device. The communication unit is operatively coupled to the power reception unit and the control unit and is configured to send the first and second target levels of the parameter to the transmitting device. The transmitting device includes a power transmission unit configured to wirelessly transmit the electric power to the receiving device at a frequency determined based on the first and second target levels of the parameter.

In yet another example, a machine readable and non-transitory medium having information recorded thereon for wireless power transmission, wherein the information, when read by the machine, causes the machine to perform a series of steps. A first target level of a parameter associated with electric power is sent by a receiving device to a transmitting device. The electric power is then wirelessly received by the receiving device from the transmitting device. When the parameter of the received electric power reaches the first target level, a second target level of the parameter is sent by the receiving device to the transmitting device. The second target level of the parameter is determined based on a magnitude of a load coupled to the receiving device.

### BRIEF DESCRIPTION OF THE DRAWINGS

The embodiments will be more readily understood in view of the following description when accompanied by the below figures and wherein like reference numerals represent like elements, wherein:

FIG. 1 is a block diagram illustrating an example of a system for wireless power transmission including a transmitting device and a receiving device, in accordance with one embodiment of the present disclosure;

FIG. 2 is a block diagram illustrating an example of the receiving device and load shown in FIG. 1, in accordance with one embodiment of the present disclosure;

FIG. 3 is a block diagram illustrating an example of the transmitting device shown in FIG. 1, in accordance with one embodiment of the present disclosure;

FIG. 4 is a time line chart illustrating an example of wireless power transmission, in accordance with one embodiment of the present disclosure;

FIG. 5 is a time line chart illustrating another example of wireless power transmission, in accordance with one embodiment of the present disclosure;

FIG. 6 is a flow chart illustrating an example of a method for wireless power transmission, in accordance with one embodiment of the present disclosure;

FIG. 7 is a flow chart illustrating another example of a method for wireless power transmission, in accordance with one embodiment of the present disclosure;

FIG. 8 is a flow chart illustrating still another example of a method for wireless power transmission, in accordance with one embodiment of the present disclosure; and

FIG. 9 is a block diagram illustrating an example of a control unit in the receiving device shown in FIG. 2 including a processor and a memory, in accordance with one embodiment of the present disclosure.

### DETAILED DESCRIPTION

Reference will now be made in detail to the embodiments of the present disclosure, examples of which are illustrated in the accompanying drawings. While the present disclosure will be described in conjunction with the embodiments, it will be understood that they are not intended to limit the present disclosure to these embodiments. On the contrary, the present disclosure is intended to cover alternatives, modifications, and equivalents, which may be included within the spirit and scope of the present disclosure as defined by the appended claims.

Furthermore, in the following detailed description of embodiments of the present disclosure, numerous specific details are set forth in order to provide a thorough understanding of the present disclosure. However, it will be recognized by one of ordinary skill in the art that the present disclosure may be practiced without these specific details. In other instances, well-known methods, procedures, components, and circuits have not been described in detail as not to unnecessarily obscure aspects of the embodiments of the present disclosure.

Embodiments in accordance with the present disclosure provide a method and apparatus for driving a large load by wireless power transmission. The method and apparatus disclosed herein can adaptively support loads with different power needs in a more efficient manner compared with known solutions. Moreover, the method and apparatus disclosed herein also support existing wireless power transmission standards, such as the QI communication protocol, and thus, are compatible with any QI-compatible transmitting device with 5W power capacity.

Additional advantages and novel features will be set forth in part in the description which follows, and in part will become apparent to those skilled in the art upon examination of the following and the accompanying drawings or may be learned by production or operation of the examples.

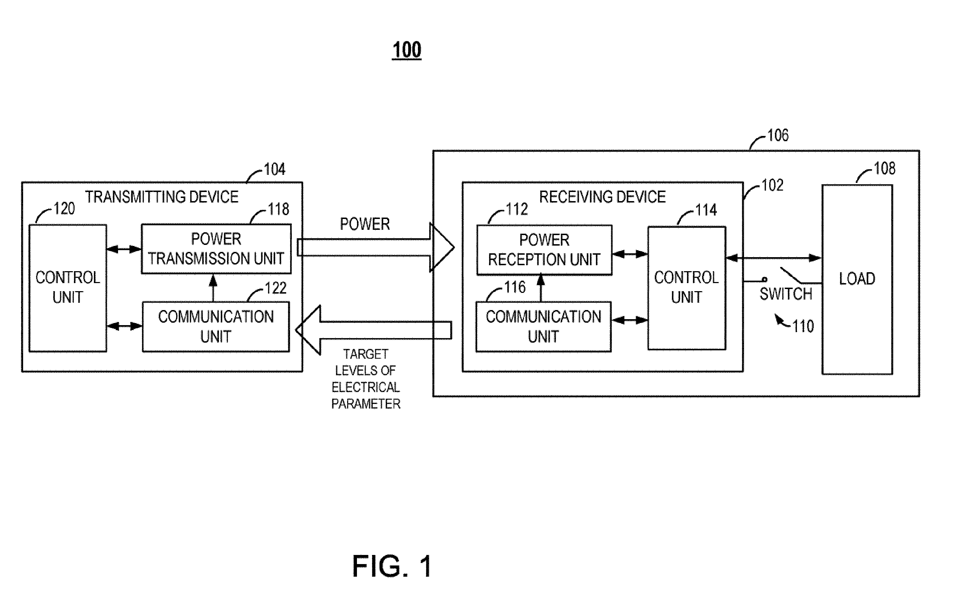

FIG. 1 illustrates one example of a system 100 for wireless power transmission, in accordance with one embodiment of the present disclosure. The system 100 may be any suitable wireless power transmission system that includes a receiving device 102 and a transmitting device 104. Electric power is wirelessly transmitted from the transmitting device 104 to the receiving device 102 by any known mechanism, such as but not limited to, resonant magnetic induction, electromagnetic radiation, or electrical conduction. The same mechanism for power transmission may be also used for sending control information from the receiving device 102 to the transmitting device 104 for adjusting any electrical parameter, such as frequency, associated with the electric power to a desired level. The control information may include, for example, target levels of an electrical parameter (desired operation point) associated with the electric power, such as the desired level of voltage, current, or power of the received electric energy.

In this example, the receiving device 102 may be part of an apparatus 106 having a load 108 that can be coupled to be receiving device 102. The apparatus 106 may be any suitable electronic device, such as but is not limited to, a laptop computer, netbook computer, digital camera, digital camcorder, handheld device (e.g., dumb or smart phone, tablet, etc.), gaming console, set-top box, music player, global positioning system (GPS), or any other suitable device. The load 108 may be, for example, a battery charger and one or more batteries. In other examples, the receiving device 102 may be a discrete electronic device for providing power to the load 108. In any event, a switch 110 may be provided between the receiving device 102 and the load 108 to control coupling of the load 108 to the receiving device 102. It is understood that any other suitable component may be included in the apparatus 106.

In this example, the receiving device 102 includes a power reception unit 112, a control unit 114, and a communication unit 116. The power reception unit 112 is configured to wirelessly receive electric power from the transmitting device 104. The control unit 114 in this example performs various control functions, such as monitoring and analyzing the electrical parameters associated with the received electric power against desired operation points (e.g., output current, voltage) and controlling the power provided to the output load 108. The control unit 114 is also configured to control sending of target levels of electrical parameters associated with the electric power to the transmitting device 104 by the communication unit 116. That is, the control unit 114 is responsible for sending its power needs back to the transmitting device 104. The communication unit 116 is configured to send control information to the transmitting device 104 in accordance with a communication protocol, such as the QI communication protocol, for example, by the same electromagnetic coupling mechanism used for power transmission. The control information in this example includes target levels of the electrical parameters associated with the electric power.

The transmitting device 104 may be any suitable base station for wirelessly providing electric power to the receiving device 102. In this example, the transmitting device 104 includes a power transmission unit 118, a control unit 120, and a communication unit 122. The power transmission unit 118 is configured to wirelessly transmit the electric power to the receiving device 102 at a certain PWM frequency. The frequency is determined by the control unit 120 based on the received target levels of the electrical parameters sent from the receiving device 102. The communication unit 122 is configured to receive the control information including the target levels of the electrical parameters from the receiving device 102.

In this example, after the initial communication between the transmitting and receiving devices 104, 102 is established, the control unit 114 of the receiving device 102 first controls the switch 110 to decouple the load 108 from the receiving device 102. The control unit 114 of the receiving device 102 then sends a first target level of a parameter associated with the electric power to the transmitting device 104. The first target level of the parameter, such as the desired output voltage, is determined regardless of the magnitude of the load 108 as it is decoupled from the receiving device 102. Upon receiving the first target level, the control unit 120 of the transmitting device 104 controls the power transmission unit 118 to adjust the PWM frequency of the transmitted electric power accordingly. The control unit 114 of the receiving device 102 then continually monitors the detected level of the parameter to see if it reaches the first target level. Once the first target level is reached, the control unit 114 is further configured to control the switch 110 to couple the load 108 to the receiving device 102 and determine a second target level of the parameter based on the magnitude of the load 108 (e.g., load current). The second target level is sent to the transmitting device 104 and used for adaptively adjusting the PWM frequency based on the magnitude of the load 108.

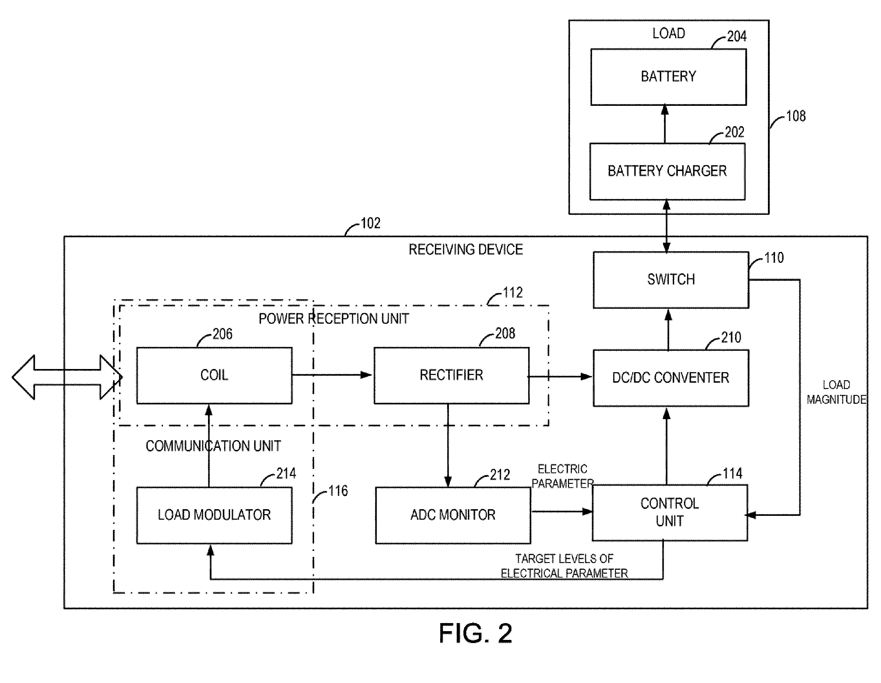

FIG. 2 illustrates one example of the receiving device 102 and load 108, in accordance with one embodiment of the present disclosure. In this example, the load 108 includes a battery charger 202 for charging a battery 204 using the power provided by the receiving device 102. The receiving device 102 includes the power reception unit 112 having a coil 206 and rectifier 208. In this example, the coil 206 is responsible for receiving magnetic field by its resonant circuit and converting it to an AC voltage signal. The rectifier 208 is configured to convert the AC voltage signal to a DC voltage signal. A DC/DC converter 210 may be included to further convert the DC voltage signal to a desired level for driving the load 108. An ADC monitor 212 may be employed to detect any suitable electrical parameter associated with the received electric power, e.g., voltage, current, or power, and provide it to the control unit 114. The receiving device 102 in this example also includes the communication unit 116 having a load modulator 214 and the coil 206. The load modulator 214 is responsible for modulating the control information, e.g., target levels of the electrical parameters, and sending it to the transmitting device 104 through the resonant circuit of the coil 206.

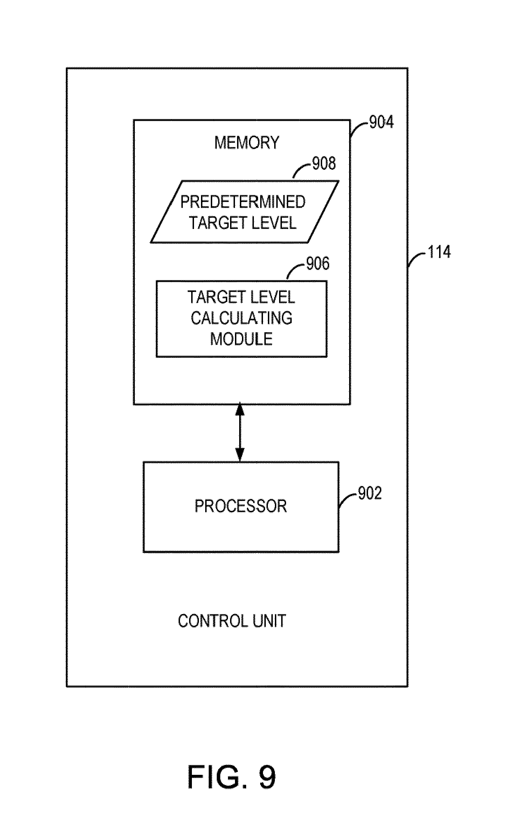

In this example, the target level of the electric parameter may be a predetermined value regardless of the magnitude of the load or a value adaptively determined based on the magnitude of the load once it is coupled to the receiving device 102 through the switch 110. In one example, as shown in FIG. 9, the control unit 114 may be implemented by one or more processors 902 and memory 904. In this example, software programs and data may be loaded into the memory 904 and executed by the processor 902. The processor 902 may be any suitable processing unit, such as but not limited to, a microprocessor, a microcontroller, a central processing unit, an electronic control unit, etc. The memory 904 may be, for example, a discrete memory or a unified memory integrated with the processor 902. The software programs may include a target level calculating module 906 for adaptively determining the desired target level of an electrical parameter based on the actual magnitude of the coupled load 108. The data includes, for example, a predetermined target level of the electrical parameter regardless of the magnitude of the load 108. In one example, the electrical parameter is the output voltage, and the predetermined target level of the output voltage is set to be higher than the desired target level determined based on the actual load magnitude.

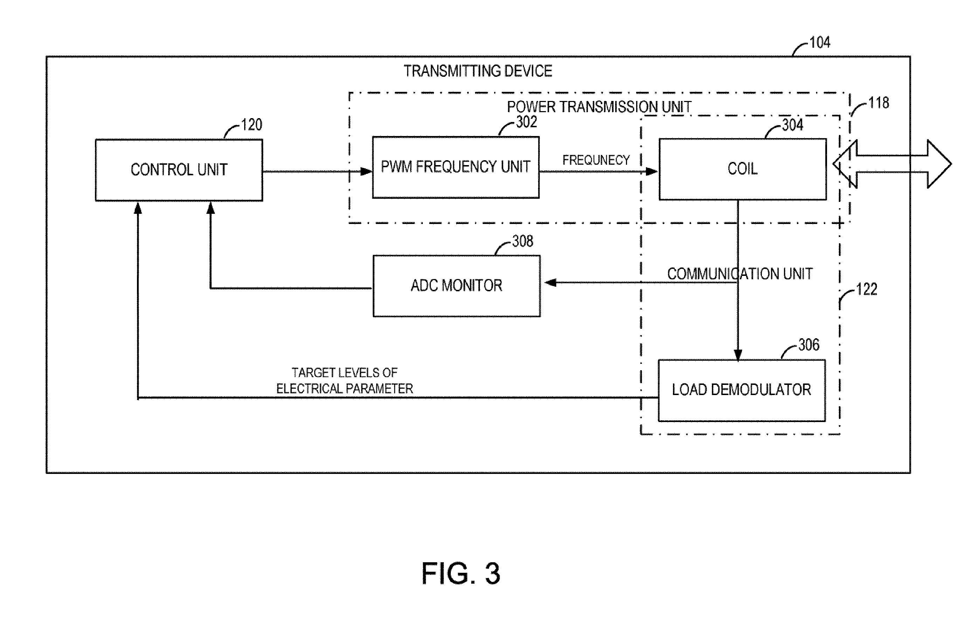

FIG. 3 illustrates one example of the transmitting device 104, in accordance with one embodiment of the present disclosure. In this example, the transmitting device 104 includes the power transmission unit 118 having a PWM frequency unit 302 and a coil 304 and the communication unit 122 having a load demodulator 306 and the coil 304. The load demodulator 306 is responsible for de-modulating the control information, e.g., target levels of the electrical parameters, picked up by the coil 304. Based on the target levels of the electrical parameter, the control unit 120 is configured to determine a corresponding PWM frequency and control the PWM frequency unit 302 to adjust the frequency to the desired level. The PWM frequency unit 302 is responsible for converting a DC voltage signal to an AC voltage signal, and the coil 304 is responsible for converting the electric field of the AC voltage signal to the magnetic field. An ADC monitor 308 may be included to provide levels of electrical parameters, such as voltage and current, to the control unit 120 for foreign object detection and over-current and over-voltage protections.

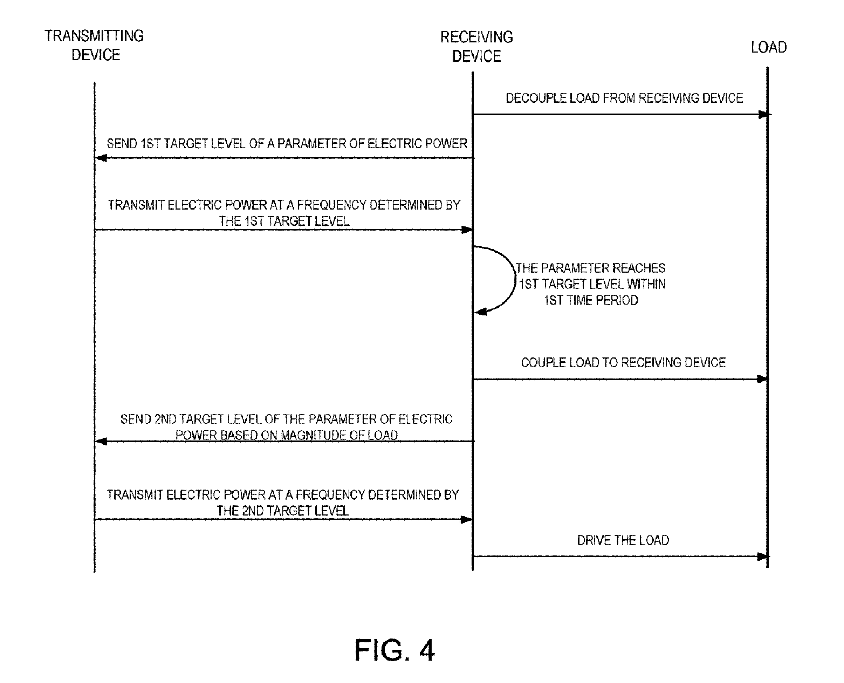

FIG. 4 is a time line chart illustrating an example of wireless power transmission, in accordance with one embodiment of the present disclosure. Initially, communication between the transmitting device 104 and receiving device 102 is established at a default frequency. According to the QI communication protocol, the default frequency is 175 kHz. Once the initial communication is established, the load 108 is decoupled from the receiving device 102. Without the knowledge of the magnitude of the load 108, the receiving device 102 sets up a parameter associated with the electric power, e.g., the output voltage, to a first target level. It is known that the output voltage of the received electric power corresponds to the PWM frequency and that the higher the PWM frequency is, the lower the output voltage is. In this example, the first target level is determined at a relative high level such that the corresponding PWM frequency is lower than the default frequency of 175 kHz. In one example, the first target level of the output voltage is determined such that the corresponding frequency is 160 kHz. The lower PWM frequency corresponds to a higher load driving capacity as known in the art. The predetermined first target level of the parameter, e.g., output voltage, is then sent to the transmitting device 104.

The transmitting device 104 then adjusts the PWM frequency of the transmitted electric power to a level that is determined based on the first target level of the parameter. In the example mentioned above, the transmitting device 104 may try to adjust its PWM frequency to 160 kHz such that the output voltage of the receiving device 102 may reach the first target level. The electric power is then transmitted to the receiving device 102 at the frequency determined based on the first target level.

In this example, once the parameter reaches the first target level at the receiving device 102, the load 108 is then coupled to the receiving device 102. Based on the actual magnitude of the load 108, the receiving device 102 determines a second target level of the parameter, e.g., output voltage, which is sufficient to drive the load 108. The second target level of the parameter is sent to the transmitting device 104 so that the transmitting device 104 may adjust the PWM frequency accordingly. The electric power is then transmitted to the receiving device 102 at the frequency determined based on the second target level.

It is understood that the first target level of output voltage may be set up to be higher than the second target level. Accordingly, the receiving device 102 has a higher load driving capacity without coupling the load in order to avoid any sudden voltage-drop and then reduces its output voltage according to the actual magnitude of the load 108 once the load 108 is coupled in order to increase its efficiency. By doing so, the receiving device 102 is able to adaptively drive loads with a wide range of magnitudes while still being compatible with existing standards, such as the QI communication protocol. The sudden voltage-drop happened in known solutions is also suppressed as the load 108 is not coupled to the receiving device 102 until the output voltage reaches a desired level.

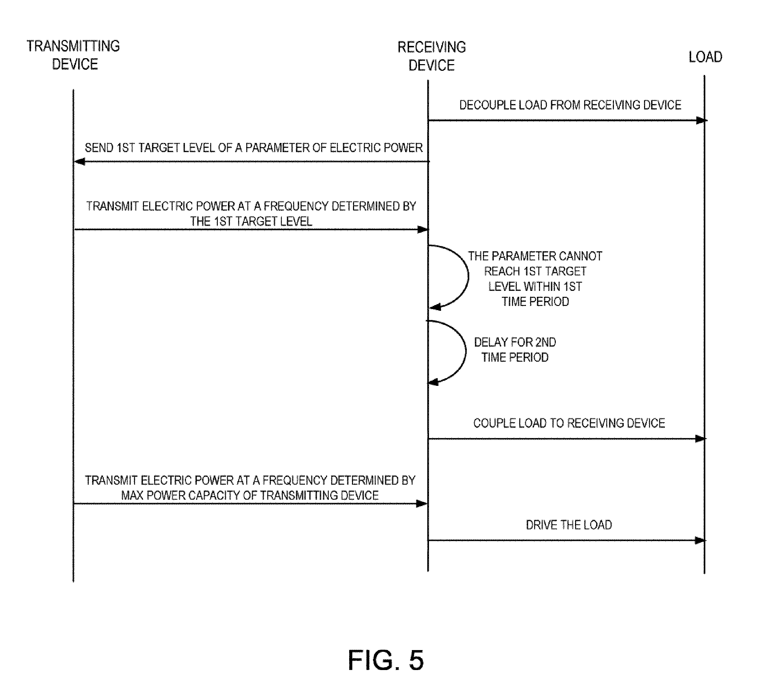

FIG. 5 is a time line chart illustrating another example of wireless power transmission, in accordance with one embodiment of the present disclosure. In this example, the transmitting device 104 may be a device with relatively low load-driving capacity, e.g., a QI-compatible 5W transmitting device. In this case, the transmitting device 104 may not be able to adjust its PWM frequency to the desired level determined based on the first target level of the electrical parameter. As a result, the electrical parameter, e.g., the output voltage, cannot reach the first target level at the receiving device 102. A first time period may be predetermined as a threshold to determine whether the transmitting device 104 has sufficient load-driving capacity. For example, if the output voltage cannot reach the first target level within the first time period, the receiving device 102 may delay for a second predetermined time period to have the transmitting device 104 reach its maximum power capacity before coupling the load 108 to the receiving device 102. The transmitting device 104 then transmits the electric power at the frequency determined based on its maximum power capacity, and the receiving device 102 now drives the load 108 with the maximum power capacity of the transmitting device 104. In one example, for a QI-compatible 5W transmitting device, the receiving device 102 drives a load with 5W power. By doing so, the receiving device 102 is still compatible with transmitting devices with relatively low power capacity even when they cannot reach the desired power capacity. The sudden voltage-drop happened in known solutions is also suppressed as the load 108 is not coupled to the receiving device 102 until the output voltage reaches its maximum possible level.

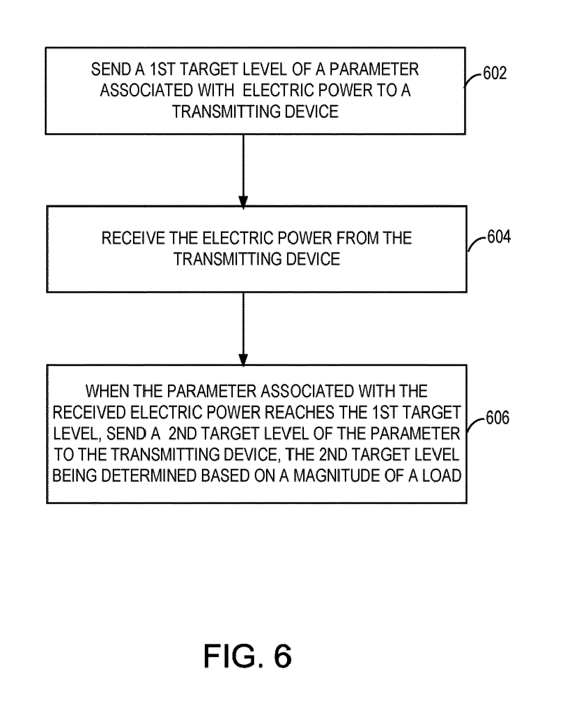

FIG. 6 depicts one example of a method for wireless power transmission, in accordance with one embodiment of the present disclosure. It will be described with reference to the above figures. However, any suitable unit may be employed. Beginning at block 602, a first target level of a parameter, e.g., output voltage, associated with the electric power is sent to the transmitting device. Proceeding to block 604, the electric power is received from the transmitting device. For example, the PWM frequency of the electric power may be determined based on the first target level of the output voltage. Moving to block 606, when the parameter of the received electric power reaches the first target level, a second target level of the parameter is sent to the transmitting device. The second target level of the parameter is determined based on a magnitude of a load, e.g., load current, coupled to the receiving device. As described above, blocks 602, 604, 606 may be performed by the receiving device 102.

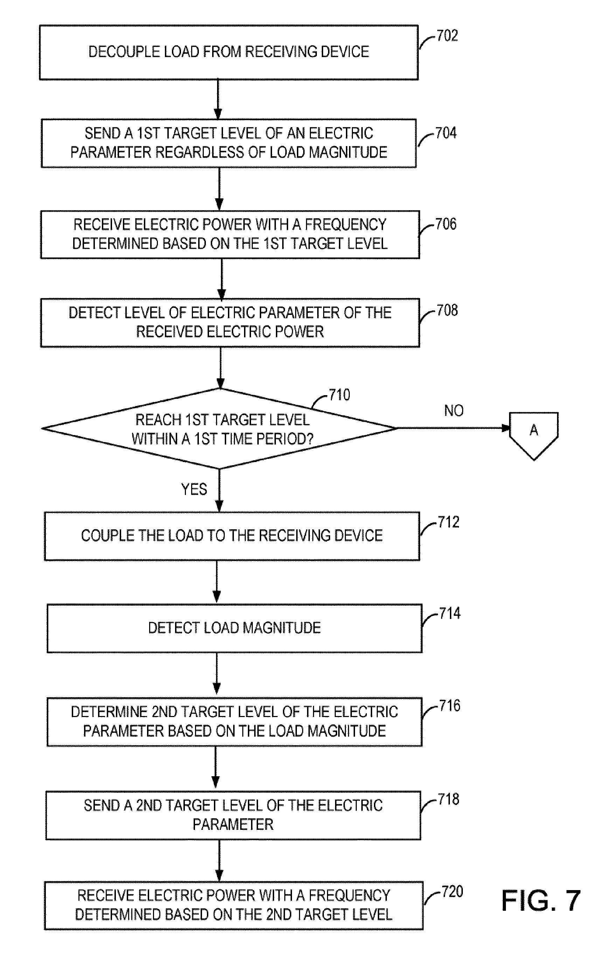

FIG. 7 depicts another example of the method for wireless power transmission, in accordance with one embodiment of the present disclosure. It will be described with reference to the above figures. However, any suitable unit may be employed. Beginning at block 702, load is decoupled from the receiving device. As described above, this may be performed by the control unit 114 of the receiving device 102 in conjunction with the switch 110. Moving to block 704, a first target level of an electrical parameter associated with electric power is sent to the transmitting device. The parameter includes, for example, voltage, current, and power. The first target level may be a predetermined level and is determined regardless of the magnitude of the load. As described above, this may be performed by control unit 114 in conjunction with the communication unit 116 of the receiving device 102. At block 706, electric power with a frequency determined based on the first target level of the parameter is received. The frequency may be adjusted by the transmitting device according to the first target level of the parameter. As described above, this may be performed by the power reception unit 112 of the receiving device 102. Moving to block 708, level of the electrical parameter of the received electric power is detected. For example, the output voltage and/or current of the rectified signal is measured. As described above, this may be performed by the ADC monitor 212 of the receiving device 102.

At block 710, whether the electrical parameter reaches the first target level within a predetermined time period is determined. As described above, this may be performed by control unit 114 of the receiving device 102. If the electrical parameter reaches the first target level within the first time period, process continues to block 712, where the load is coupled to the receiving device. As described above, this may be performed by the control unit 114 of the receiving device 102 in conjunction with the switch 110. At block 714, the magnitude of the load, e.g., load current, is detected. Moving to block 716, the second target level of the electrical parameter is determined based on the detected load magnitude. For example, the electrical parameter may be output voltage, and the first target level of the output voltage is higher than the second target level of the output voltage. As described above, blocks 714, 716 may be performed by the control unit 114 of the receiving device 102. At block 718, the second target level of the electrical parameter is sent to the transmitting device. As described above, this may be performed by control unit 114 in conjunction with the communication unit 116 of the receiving device 102. At block 720, electric power with a frequency determined based on the second target level of the parameter is received. The frequency may be adjusted by the transmitting device according to the second target level of the parameter. As described above, this may be performed by the power reception unit 112 of the receiving device 102.

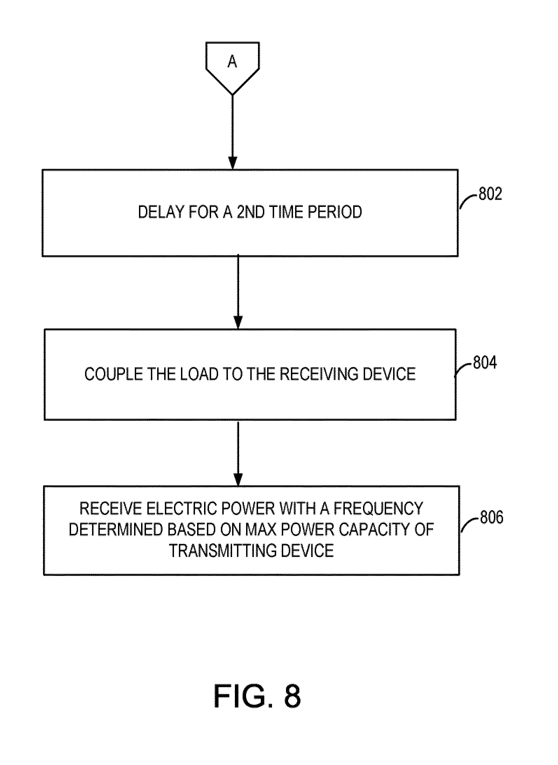

FIG. 8 depicts still another example of the method for wireless power transmission, in accordance with one embodiment of the present disclosure. It will be described with reference to the above figures. However, any suitable unit may be employed. At block 802, if the electrical parameter cannot reach the first target level within the first time period at block 710, a second predetermined time period is delayed by the receiving device. Moving to block 804, load is coupled to the receiving device after the delay. As described above, this may be performed by the control unit 114 of the receiving device 102 in conjunction with the switch 110. At block 806, electric power with a frequency determined based on the maximum power capacity of the transmitting device is received. As described above, this may be performed by the power reception unit 112 of the receiving device 102.

Aspects of the method for wireless power transmission, as outlined above, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors or the like, or associated modules thereof, such as various semiconductor memories, tape drives, disk drives and the like, which may provide storage at any time for the computer-implemented method.

All or portions of the computer-implemented method may at times be communicated through a network such as the Internet or various other telecommunication networks. Such communications, for example, may enable loading of the software from one computer or processor into another. Thus, another type of media that may bear the elements of the computer-implemented method includes optical, electrical, and electromagnetic waves, such as used across physical interfaces between local devices, through wired and optical landline networks and over various air-links. The physical elements that carry such waves, such as wired or wireless links, optical links or the like, also may be considered as media bearing the computer-implemented method. As used herein, unless restricted to tangible "storage" media, terms such as computer or machine "readable medium" refer to any medium that participates in providing instructions to a processor for execution.

Hence, a machine readable medium may take many forms, including but not limited to, a tangible storage medium, a carrier wave medium or physical transmission medium. Non-volatile storage media include, for example, optical or magnetic disks, such as any of the storage devices in any computer(s) or the like, which may be used to implement the system or any of its components as shown in the drawings. Volatile storage media include dynamic memory, such as a main memory of such a computer platform. Tangible transmission media include coaxial cables; copper wire and fiber optics, including the wires that form a bus within a computer system. Carrier-wave transmission media can take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

Those skilled in the art will recognize that the present disclosure is amenable to a variety of modifications and/or enhancements. For example, although the implementation of various components described above may be embodied in a hardware device, it can also be implemented as a firmware, firmware/software combination, firmware/hardware combination, or a hardware/firmware/software combination.

While the foregoing description and drawings represent embodiments of the present disclosure, it will be understood that various additions, modifications, and substitutions may be made therein without departing from the spirit and scope of the principles of the present disclosure as defined in the accompanying claims. One skilled in the art will appreciate that the present disclosure may be used with many modifications of form, structure, arrangement, proportions, materials, elements, and components and otherwise, used in the practice of the disclosure, which are particularly adapted to specific environments and operative requirements without departing from the principles of the present disclosure. The presently disclosed embodiments are therefore to be considered in all respects as illustrative and not restrictive, the scope of the present disclosure being indicated by the appended claims and their legal equivalents, and not limited to the foregoing description.

## Claims

1. A method for a receiving device to wirelessly receive electric power from a transmitting device, the method comprising the steps of:
sending a first target level of a parameter associated with the electric power to the transmitting device;
receiving the electric power from the transmitting device; and
when the parameter of the received electric power reaches the first target level, sending a second target level of the parameter to the transmitting device, wherein the second target level of the parameter is determined based on a magnitude of a load coupled to the receiving device.

2. The method of claim 1, wherein the parameter is at least one of voltage, current, and power.

3. The method of claim 1 or 2, wherein the first target level of the parameter is higher than the second target level of the parameter.

4. The method of claim 1, 2 or 3, wherein the first target level of the parameter is determined regardless of the magnitude of the load.

5. The method of one of claims 1 to 4, further comprising the steps of:
once the parameter of the received electric power reaches the first target level, coupling the load to the receiving device;
detecting the magnitude of the load; and
determining the second target level of the parameter based on the magnitude of the load.

6. The method of one of claims 1 to 5, further comprising the steps of:
upon receiving the first target level of the parameter, adjusting, by the transmitting device, a frequency of the electric power based on the first target level of the parameter; and
upon receiving the second target level of the parameter, adjusting, by the transmitting device, the frequency of the electric power based on the second target level of the parameter.

7. The method of one of claims 1 to 5, further comprising the step of:
when the parameter associated with the received electric power has not reached the first target level for a first time period, coupling the load to the receiving device after a second time period.

8. The method of claim 7, further comprising the step of:
adjusting, by the transmitting device, a frequency of the electric power based on a maximum power capacity of the transmitting device.

9. The method of one of claims 1 to 8, wherein the magnitude of the load corresponds to a level of load current.

10. An apparatus comprising a receiving device comprising:
a power reception unit configured to wirelessly receive electric power from a transmitting device;
a control unit operatively coupled to the power reception unit and configured to:
control sending of a first target level of a parameter associated with the electric power to the transmitting device, and
when the parameter of the received electric power reaches the first target level, control sending of a second target level of the parameter to the transmitting device, wherein the second target level of the parameter is determined based on a magnitude of a load coupled to the receiving device; and
a communication unit operatively coupled to the power reception unit and the control unit and configured to send the first and second target levels of the parameter to the transmitting device.

11. The apparatus of claim 10, further comprising a load and a switch configured to control coupling of the load to the receiving device.

12. The apparatus of claim 11, wherein the switch is configured to decouple the load from the receiving device before the first target level of the parameter is determined.

13. The apparatus of claim 11, wherein
the switch is configured to, once the parameter of the received electric power reaches the first target level, couple the load to the receiving device; and
the control unit is further configured to:
detect the magnitude of the load, and
determine the second target level of the parameter based on the magnitude of the load.

14. The apparatus of claim 1 l, 12 or 13, wherein the switch is configured to, when the parameter associated with the received electric power has not reached the first target level for a first time period, couple the load to the receiving device after a second time period.

15. A system for wireless power transmission comprising:
an apparatus according to one of claims 10 to 14; and
a transmitting device comprising a power transmission unit configured to wirelessly transmit the electric power to the receiving device at a frequency determined based on the first and second target levels of the parameter.

16. The system of claim 15, wherein the transmitting device further comprises a control unit configured to:
upon receiving the first target level of the parameter, adjust the frequency of the transmitted electric power based on the first target level of the parameter; and
upon receiving the second target level of the parameter, adjust the frequency of the transmitted electric power based on the second target level of the parameter.

17. The system of claim 15 or 16, wherein the transmitting device further comprises a control unit configured to, when the parameter associated with the received electric power has not reached the first target level for the first time period, adjust the frequency of the transmitted electric power based on a maximum power capacity of the transmitting device.

18. A machine-readable tangible and non-transitory storage medium comprising a computer program adapted to perform a method for wireless power transmission according to one of claims 1 to 9.
